# EUROPÄISCHE PATENTANMELDUNG

(11) **EP 0 989 772 A2**
(43) Veröffentlichungstag der Anmeldung: **29.03.2000**
(21) Anmeldenummer: 99440249.3
(22) Anmeldetag: 17.09.1999
(51) Int. Cl.: H04Q 11/04

(54) **Netzabschlusseinrichtung eines Telekommunikationsnetzes**

(30) Priorität: 23.09.1998 DE 19843601
(71) Anmelder: ALCATEL, 75008 Paris (FR)
(72) Erfinder: Peters, Wolfgang, Dr., 71732 Tamm (DE); Schneider, Gerhard, 71229 Leonberg (DE)
(74) Vertreter: Menzietti, Domenico, Dipl.-Ing

(57) **Zusammenfassung**

Aufgabe der Erfindung ist es, eine Netzabschlußeinrichtung (NT) zu schaffen, die universell einsetzbar ist und eine gerechte Vergebührung ermöglicht. Die erfindungsgemäße Netzabschlußeinrichtung (NT) ist insbesondere dadurch gekennzeichnet, daß sie eine Umschalteeinrichtung (DET, 1, 2, 3) beinhaltet, mittels derer die netzseitige Schnittstelle (a/b, U) von einer analogen (a/b) in eine digitale (U) umschaltbar ist. Ein Teilnehmer, der eine digitale Schnittstelle benötigt, weil er z.B. zwei B-Kanäle des ISDN zu freien Verfügung haben möchte, kann eine digitale Schnittstelle (U) freischalten/freischalten lassen. Ein Teilnehmer, der nur einen analogen Anschluß wünscht, kann diesen freischalten/freischalten lassen. Die Netzabschlußeinrichtung (NT) beinhaltet dazu einen Schalter (3) und einen Detektor (DET). Auch kann die Umschaltung zwischen analogem und digitalem netzseitigen Anschluß ohne Austausch der Netzabschlußeinrichtung (NT) erfolgen.

## Beschreibung

Die Erfindung betrifft eine Netzabschlußeinrichtung eines Telekommunikationsnetzes nach dem Oberbegriff des Patentanspruchs 1.

Ein Telekommunkationsnetz, insbesondere ein Fernsprechnetz ist üblicherweise aus mehreren Vermittlungsstellen aufgebaut, die untereinander verbunden sind. An jede Vermittlungsstelle ist eine Vielzahl von Endstellen angeschlossen. Am Übergang einer Endstelle zum Telekommunikationsnetz befindet sich jeweils eine Netzabschlußeinrichtung.

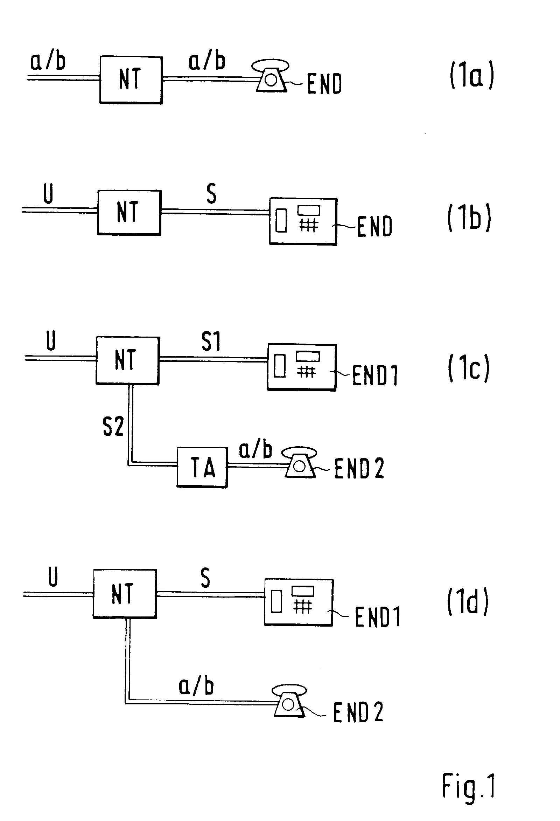

Anhand der Fig. 1 wird im folgenden erläutert, wie sich im Laufe der Zeit der Aufbau einer Netzabschlußeinrichtung verändert hat. In Fig. 1a ist eine Netzabschlußeinrichtung für ein rein analoges Telekommunikationsnetz dargestellt. Die Netzabschlußeinrichtung NT hat netzseitig und teilnehmerseitig jeweils eine analoge Schnittstelle a/b. Die Endstelle kann über die teilnehmerseitige analoge Schnittstelle ein Endgerät END, z.B. ein analoges Telefon ans Telekommunikationsnetz anschließen.

In Fig. 1 b ist eine Netzabschlußeinrichtung für ein rein digitales Telekommunikationsnetz dargestellt. Die Netzabschlußeinrichtung NT hat netzseitig und teilnehmerseitig jeweils eine digitale Schnittstelle U bzw. S. Die Endstelle kann über die teilnehmerseitige digitale Schnittstelle ein Endgerät END, z.B. ein digitales Telefon ans Telekommunikationsnetz anschließen.

In Fig. 1c ist eine Netzabschlußeinrichtung für ein diensteintegrierendes digitales Telekommunikationsnetz, dem sog. ISDN dargestellt. Die Netzabschlußeinrichtung NT hat netzseitig eine digitale Schnittstelle U und teilnehmerseitig zwei digitale Schnittstellen S1, S2. Die Endstelle kann über die teilnehmerseitige digitale Schnittstelle S1 ein Endgerät ENDl, z.B. ein digitales Telefon oder einen PC und über die teinehmerseitige digitale Schnittstelle S2 unter Verwendung eines Adapters TA, sog. Terminal Adapter zusätzlich auch ein analoges Endgerät END2, z.B. ein analoges Telefon ans Telekommunikationsnetz anschließen. Bei der sog.
Basisanschlußkonfiguration stehen einer Endstelle zwei sog. B-Kanäle mit jeweils 64kbit/s zur Übertragung zur Verfügung, die unabhängig voneinander genutzt werden können. So kann z.B. über die Schnittstelle S2 ein Telefonat geführt werden und gleichzeitig über die Schnittstelle S1 im internet gesurft werden.

In Fig. 1d ist ebenfalls eine Netzabschlußeinrichtung für ein diensteintegrierendes digitales Telekommunikationsnetz, dem sog. ISDN dargestellt, mit dem Unterschied, daß der Terminal Adapter in der Netzabschlußeinrichtung integriert ist, mit dem Vorteil, daß nun analoge Endgeräte END2, z.B. ein analoges Telefon direkt an die Netzabschlußeinrichtung NT anschließbar sind. Diese Netzabschlußeinrichtung NT bietet somit maximale Anschlußfreiheit auf der Teilnehmerseite, mit dem Nachteil, daß auf jeden Fall auf der Netzseite ein Zugang zu einem digitalen Telekomminkationsnetz, z.B. dem ISDN erforderlich ist. Ein Teilnehmer, der nur ein analoges Endgerät betreiben will, muß dadurch ungerechtfertigterweise hohe Anschlußgebühren für einen digitalen Anschluß bezahlen.

Die in Fig. 1d dargestellte Netzabschlußeinrichtung entspricht ihrem Aufbau und ihrer Funktionsweise der Netzabschlußeinrichtung NTtwin+, die im Alcatel Firmenprospekt "Alcatel 1581 ID, NTtwin+, ISDN BRA NT1 +2ab equipment, technical description" und dem Alcatel Falfblatt "Alcatel 1581 ID, NTtwin+, The bridge to a new technology" näher beschrieben ist.

Aufgabe der Erfindung ist es, eine Netzabschlußeinrichtung zu schaffen, die universell einsetzbar ist und eine gerechte Vergebührung ermöglicht.

Gelöst wird die Aufgabe durch eine Netzabschlußeinrichtung nach Patentanspruch 1. Insbesondere ist die Netzabschlußeinrichtung dadurch gekennzeichnet, daß sie eine Umschalteeinrichtung beinhaltet, mittels derer die netzseitige Schnittstelle von einer analogen in eine digitale umschaltbar ist. Dadurch wird auch eine maximale Anschlußfreiheit auf der Netzseite erreicht. Ein Teilnehmer, der eine digitale Schnittstelle benötigt, weil er z.B. zwei B-Kanäle zu freien Verfügung haben möchte, kann eine digitale Schnittstelle freischalten/freischalten lassen. Ein Teilnehmer, der nur einen analogen Anschluß wünscht, kann diesen freischalten/freischalten lassen. Auch kann bei einer vorteilhaften Ausgestaltung der Erfindung, bei der die Umschaltung reversibel erfolgt, je nach Bedarf eine zeitweise Umschaltung auf einen analogen Anschluß erfolgen, z.B. während des Urlaubs, um Anschlußgebühren zu sparen, und zeitweise eine Umschaltung auf einen digitalen Anschluß erfolgen, z.B. bei der geplanten Benutzung eines Bildtelefons, was die gleichzeitige Benutzung von zwei B-Kanälen erforderlich macht. Auch kann die Umschaltung zwischen analogem und digitalem netzseitigen Anschluß ohne Austausch der Netzabschlußeinrichtung erfolgen. Des weiteren stellt die Netzabschlußeinrichtung eine Erweiterung der Funktionalität von ISDN dar, da das Umschalten von analog auf digital wieder rückgängig machbar ist, und zwar insbesondere ohne Austausch einer Netzabschlußeinrichtung. Dies kann die Hemmschwelle von Kunden beim ins Auge gefaßten Übergang vom analogen Netz aufs ISDN reduzieren.

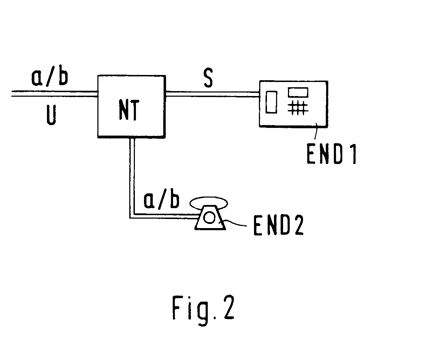

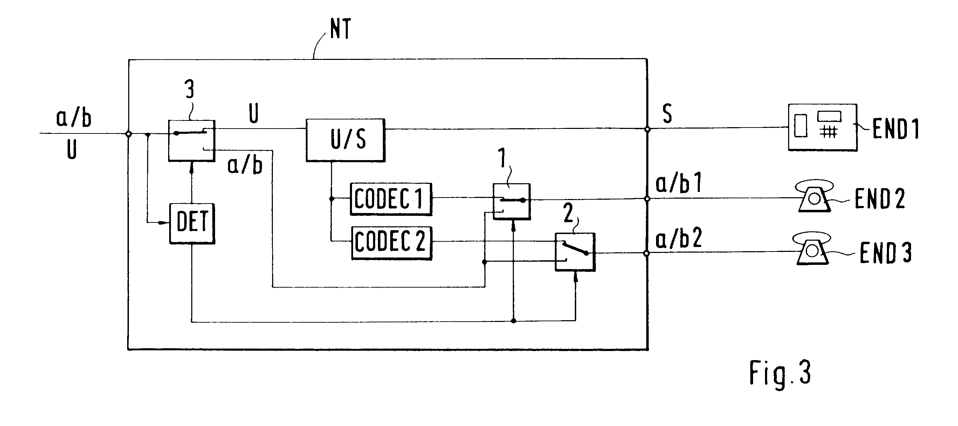

Im folgenden wird ein Ausführungsbeispiel der Erfindung unter Zuhilfenahme der Figuren 2 und 3 erläutert. Es zeigen:
- Fig. 2: eine erfindungsgemäße Netzabschlußeinrichtung, an die zwei Endgeräte angeschlossen sind,
- Fig. 3: eine weitere erfindungsgemäße Netzabschlußeinrichtung, an die drei Endgeräte angeschlossen sind in einer detaillierteren Ausführungsform.

Das Ausführungsbeispiel wird zunächst unter Zuhilfenahme der Fig. 2 erläutert. Fig. 2 zeigt eine Netzabschlußeinrichtung NT. Die Netzabschlußeinrichtung NT beinhaltet eine netzseitige Schnittstelle a/b, U, um die Netzabschlußeinrichtung mit einem Telekommunikationsnetz zu verbinden. Ferner ist mindestens eine analoge teilnehmerseitige Schnittstelle a/b zum Anschluß mindestens eines analogen Endgerätes END2 und mindestens eine digitale teilnehmerseitige Schnittstelle S zum Anschluß mindestens eines digitalen Endgerätes END1 vorgesehen. Endgerät END1 ist beispielsweise ein digitales Telefon oder ein Computer, Endgerät END2 beispielsweise ein analoges Telefon oder ein Faxgerät. Das Telekomminkationnetz ist derart ausgelegt, daß es sowohl analoge als auch digitale Übertragungen unterstützt, z.B. durch Umschaltung in einer Vermittlungsstelle von einem analogen Netz auf ein digitales Netz. Als analoges Netz kommt z.B. das sog. POTN = Plain Old Telephone Network in Frage. Als digitales Netz kann das diensteintegrierende digitale Netz, das sog. ISDN verwendet werden.

Ein Teilnehmer soll die freie Wahl zwischen einem Zugang zum analogen Netz und einem Zugang zum digitalen Netz haben. Die Netzabschlußeinrichtung NT beinhaltet dazu ein Umschaltemittel zur Umschaltung der netzseitigen Schnittstelle a/b, U von einer analogen a/b auf eine digitale U Schnittstelle. Das Umschaltemittel ist beispielsweise als elektronischer Schalter, z.B. als Relais ausgeführt. Bei der sog. Basisanschlußkonfiguration im ISDN stehen einer Endstelle zwei sog. B-Kanäle mit jeweils 64kbit/s zur Übertragung zur Verfügung, die unabhängig voneinander genutzt werden können. Die teilnehmerseitige Schnittstelle der Netzabschlußeinrichtung NT ist dazu als sog. S- oder SO-Schnittstelle auszulegen, die netzseitige Schnittstelle als sog. U- oder UkO-Schnittstelle. Auf diese Art und Weise kann ein Teilnehmer, der nur an einer analogen netzseitigen Schnittstelle interessiert ist, weiterhin kostengünstig eine Verbindung zum analogen Netz aufbauen. Ein Teilnehmer, der an einer digitalen netzseitigen Schnittstelle interessiert ist, kann mit dergleichen Netzabschlußeinrichtung NT eine Verbindung zum digitalen Netz herstellen. Vorteilhaft wirkt sich weiterhin der Umschaltvorgang zwischen analogem und digitalen Netz aus. Der Umschaltvorgang kann ohne Unterbrechung erfolgen. Ein Teilnehmer beantragt z.B. die Durchschaltung eines digitalen Anschlußes beim Netzbetreiber. Von der mit der Endstelle des Teilnehmers verbundenen Vermittlungsstelle wird die Durchschaltung telemetrisch bewirkt, indem sie ein entsprechendes Umschaltsignal zur Netzabschlußeinrichtung NT übermittelt. Es ist insbesondere nicht notwendig, daß die Netzabschlußeinrichtung NT durch einen Monteur ausgetauscht werden muß. Ferner ist es nicht notwendig, daß die Verbindung zwischen Netzabschlußeinrichtung NT und Vermittlungstelle zum Zwecke der Initialisierung unterbrochen werden muß. Solange der Initialisierungsprozeß zur Umschaltung aufs digitale Netz nicht abgeschlossen ist, bleibt dem Teilnehmer der analoge Anschluß erhalten, so daß er diesen weiterhin nutzen kann. Sobald der Initialisierungsprozeß abgeschlossen ist, wird umgeschaltet und dem Teilnehmer steht ein digitaler Anschluß zu Verfügung. Ist der Anschluß ein ISDN Basisanschluß kann der Teilnehmer fortwährend zwei B-Kanäle mit jeweils 64kbit/s gleichzeitig nutzen.

Bei einer bevorzugten Ausführungsform ist das Umschaltemittel geeignet, zwischen der analogen a/b und der digitalen U netzseitigen Schnittstelle a/b, U reversibel hin- und herzuschalten. Dies wird durch einen reversiblen Schalter erreicht, z.B. ein Relais oder ein Transistor. Der Teilnehmer hat damit die Möglichkeit seinen digitalen Anschluß beim Netzbetreiber wieder auf einen analogen Anschluß umzumelden. Die Rückumschaltung erfolgt durch die Vermittlungstelle, die ein Umschaltesignal zur Netzebschlußeinrichtung NT überträgt, die das Umschaltemittel veranlaßt wieder auf die analoge netzseitige Schnittstelle umzuschalten. Die Umschaltung erfolgt wiederum ohne Unterbrechung und kann jederzeit online durchgeführt werden.

Bei einem digitalen netzseitigen Anschluß können alle teilnehmerseitigen Schnittstellen verwendet werden, bei einem analogen netzseitigen Anschluß nur die analogen teilnehmerseitigen Schnittstellen.

Das Ausführungsbeispiel wird nun weiter unter Zuhilfenahme von Fig. 3 erläutert. Fig. 3 zeigt eine Netzabschlußeinrichtung NT, an die drei Endgeräte END1, END2, END3 angeschlossen sind.

Die Netzabschlußeinrichtung aus Fig. 3 entspricht in ihrem Aufbau und in ihrer Funktionalität der Netzabschlußeinrichtung aus Fig. 1. Der Aufbau der Netzabschlußeinrichtung NT aus Fig. 3 ist detaillierter und wird im folgenden erläutert.

Das Umschaltemittel DET, 1, 2, 3 beinhaltet einen Detektor DET und einen durch den Detektor DET ansteuerbaren und zwischen der netzseitigen a/b, U und mindestens einer anologen a/bl, a/b2 sowie einer digitalen S teilnehmerseitigen Schnittstelle plazierten Schalter 3. Der Detektor DET ist geeignet, ein Umschaltsignal zu empfangen und in Abhängigkeit vom Umschaltsignal den Schalter 3 zu betätigen. Der Detektor DET ist beispielsweise als Mikroprozessor oder als Digitaler Signalprozessor ausgeführt, der bei Empfang einer Kennung den Schalter 3 umschaltet. Z.B. kann eine Kennung durch die Bitfolge 11111111 gegeben sein und eine weitere Kennung durch die Bitfolge 00000000. Bei der Kennung 11111111 schaltet der Detektor DET den Schalter 3 so um, daß die netzseitige Schnittstelle als digitale Schnittstelle ausgeführt ist. Bei der Kennung 00000000 schaltet der Detektor DET den Schalter 3 so um, daß die netzseitige Schnittstelle als analoge Schnittstelle ausgeführt ist.

Der Detektor DET ist geeignet, das Umschaltsignal telemetrisch über das Telekommunikationsnetz zu empfangen. Z.B. wird von der Vermittlungsstelle auf eine Anforderung des Teilnehmers hin zur Umschaltung auf einen ISDN-Anschluß ein Umschaltsignal beinhaltend die Kennung 11111111 zur Endstelle übertragen. Der Detektor DET empfängt die Kennung und schaltet daraufhin um. Alternativ oder zusätzlich kann an der Netzabschlußeinrichtung NT ein manuell betätigbaren (nicht dargestellter) Schalter angebracht werden, der mit dem Detektor DET verbunden ist. Durch Betätigen des Schalters wird dem Detektor DET ein umschaltsignal übermittelt. Z.B. ist der Schalter als Druckschalter oder Umklappschalter mit zwei Stellungen ausgeführt. In der einen Stellung schaltet der Detektor DET die netzseitige Schnittstelle als digitale Schnittstelle, in der anderen Stellung als analoge Schnittstelle. Zusätzlich kann eine Lichtanzeige, z.B. durch LEDs vorgesehen sein, die den Betrieb als analoge oder digitale Schnittstelle anzeigt, so daß der Teilnehmer kontrollieren kann in welchem Betrieb sich die Netzabschlußeinrichtung NT befindet. In einer einfachen mechanischen Version kann der Detektor DET entfallen. Durch einen mechanischen, von außerhalb der Netzabschlußeinrichtung zugänglichen und betätigbaren Schalter, z.B. umgebauter Schalter 3, wird direkt durch den Teilnehmer zwischen analoger und digitaler Schnittstelle umgeschaltet. Bei jeder Umschaltung wird ein Signal zur Vermittlungstelle übertragen, die daraufhin die nötige Initialisierung vornimmt und die Gebührenberechnung durchführt. Der Teilnehmer kann somit frei wählen wann er welchen Anschluß benötigt und kann somit Gebühren sparen, da z.B. die Bereitstellung eines digitalen Anschlusses mehr Geld kostet als die Bereitstellung eines analogen.

Die Netzabschlußeinrichtung NT beinhaltet mindestens eine Umsetzeinrichtung CODEC1, CODEC2 zur Umsetzung von analogen in digitale Signale. In Fig. 3 sind zwei Umsetzeinrichtungen CODEC1, CODEC2 dargestellt, die zur Bereitstellung von zwei analogen teilnehmerseitigen Schnittstellen a/b1 bzw. a/b2 dienen. Die Umsetzeinrichtung CODEC1 wandelt die über die analoge Schnittstelle a/b1 empfangenen analogen Signale in digitale um, und die über das Telekommunikationsnetz empfangenen und für die analoge Schnittstelle a/b1 bestimmten digitalen Signale in analoge um. Die Umsetzeinrichtung CODEC2 wandelt in entsprechender Weise die über die analoge Schnittstelle a/b2 empfangenen und die für die analoge Schnittstelle a/b2 bestimmten Signale um. Jede Umsetzeinrichtung CODEC1, CODEC2 beinhaltet dazu einen Analog/Digital-Umsetzer, einen Digital/Analog-Umsetzer und ggf. einen Kodierer, einen Dekodierer, zwei Filter, zwei Entzerrer, etc.. Die Umsetzeinrichtungen CODEC1, CODEC2 nehmen jeweils die Aufgabe eines Terminal Adapters wahr.

Die Netzabschlußeinrichtung NT beinhaltet mindestens eine Verarbeitungseinrichtung U/S zur Protokollanpassung der teilnehmerseitigen digitalen Signale an die netzseitigen digitalen Signale. In Fig. 3 ist eine Verarbeitungseinrichtung U/S dargestellt. Die Verarbeitungseinrichtung U/S dient zur Bereitstellung einer teilnehmerseitigen S-Schnittstelle und einer netzseitigen U-Schnittstelle zur Verwendung der Netzabschlußeinrichtung NT in einem diensteintegrierenden digitalen Netz, dem sog. ISDN. Die Verarbeitungseinrichtung U/S beinhaltet z.B. einen Mikroprozessor und einen Speicher. Die über die teilnehmerseitige Schnittstelle S empfangenen Signale beinhalten beispielsweise bei einer Basisanschlußkonfiguration 2x64kbit/s für die beiden B-Kanäle + 16kbit/s für den Signalisierungskanal, den sog. D-Kanal. Auf der netzseitigen Schnittstelle wird ein Protokoll mit 160kbit/s verarbeitet. Dieses Protokoll enthält neben den zwei B-Kanälen und dem D-Kanal einen zusätzlichen Steuerkanal, in dem Kontrollinformationen, wie z.B. Paritybits übertragen werden. Die Protokollanpassung wird in der Verarbeitungseinrichtung U/S durchgeführt. Der Mikroprozessor der Verarbeitungseinrichtung U/S kann die Aufgaben des Detektors DET mit übernehmen, so daß ein separater Detektor DET nicht erforderlich ist.

Die Verarbeitungseinrichtung U/S ist teilnehmerseitig mit der Schnittstelle S und netzseitig mit dem Schalter 3 verbunden. Ferner ist die Verarbeitungseinrichtung U/S mit den Umsetzeinrichtungen CODEC1, CODEC2 verbunden. Bei einem durchgeschalteten digitalen netzseitigen Anschluß übernimmt die Verarbeitungseinrichtung U/S auch die Aufgabe die über die analogen teilnehmerseitigen Schnittstellen a/b1 und a/b2 empfangen Signale ins U-Schnittstellen Protokoll umzusetzen sowie die Vorverarbeitung für die über das Telekommunikationsnetz empfangenen und für die beiden analogen teilnehmerseitigen Schnittstellen a/b1 und a/b2 bestimmten Signale durchzuführen.

Des weiteren sind zwei Schalter 1 und 2 vorgesehen. Schalter 1, z.B. als Relais ausgeführt, ist zwischen Umsetzeinrichtung CODEC1 und analoger teilnehmerseitiger Schnittstelle a/b1 geschaltet. Schalter 2, z.B. als Relais ausgeführt, ist zwischen Umsetzeinrichtung CODEC2 und analoger teilnehmerseitiger Schnittstelle a/b2 geschaltet. Die Schalter 1 und 2 dienen dazu, die analogen Schnittstellen a/b1 und a/b2 zur netzseitigen Schnittstelle a/b, U durchzuschalten, wenn ein analoger netzseitiger Zugang zum Telekommunikationsnetz gewünscht ist und die analogen Schnittstellen a/b1 und a/b2 mit den Umsetzeinrichtungen CODEC1 bzw. CODEC2 zu verbinden, wenn ein digitaler netzseitiger Zugang zum Telekommunikationsnetz gewünscht ist. Die Schalter 1 und 2 werden z.B. durch den Detektor DET angesteuert. Alternativ können die Schalter 1 und 2 auch mit dem für den Schalter 3 vorgesehen mechanischen Schalter umgeschaltet werden.

Der Detektor DET ist zusätzlich geeignet, die Stromzufuhr der Umsetzeinrichtungen CODEC1 und CODEC2 sowie der Verarbeitungseinrichtung U/S zu beeinflussen. Der Detektor DET ist dazu beispielsweise mit der Strom-/Spannungsversorgung dieser Einrichtungen verbunden. Im Falle einer analogen netzseitigen Schnittstelle werden die Einrichtungen nicht benötigt. Um Strom zu sparen schaltet der Detektor DET die Stromversorgung für die Einrichtungen ab. Dies erfolgt beispielsweise über einen im Stromversorgungspfad eingeschleiften Steuertransistor. Im Falle einer digitalen netzseitigen Schnittstelle werden die Einrichtungen nur bei einem Zugang zum Telekommunikationsnetz benötigt, z.B. zur Durchführung eines Telefonats. Der Detektor DET überwacht die teilnehmerseitgen Schnittstellen und schaltet die Einrichtungen in einen Stromsparmodus, z.B. stand-by, wenn keine Verbindungsanforderung und keine netzseitige Verbindung besteht. Erfolgt z.B. eine Verbindungsanforderung über die analoge Schnittstelle a/b2, so muß lediglich die Stromversorgung an die Einrichtungen U/S und CODEC2 angeschaltet werden. Die Einrichtung CODEC1 kann im Stromsparmodus betrieben werden oder komplett ausgeschaltet werden. Erfolgt z.B. eine Verbindungsanforderung über die digitale Schnittstelle S mit gleichzeitig inaktiven Schnittstellen a/b1 und a/b2, so muß lediglich die Stromversorgung an die Einrichtungen U/S angeschaltet werden. Die Einrichtungen CODEC1 und CODEC2 können im Stromsparmodus betrieben werden oder komplett ausgeschaltet werden. Nach Beendigung der Verbindung kann die Einrichtung U/S wieder im Stromsparmodus betrieben werden oder komplett ausgeschaltet werden.

## Patentansprüche

1. Netzabschlußeinrichtung (NT) eines Telekommunikationsnetzes, beinhaltend eine netzseitige Schnittstelle (a/b, U), mindestens eine analoge teilnehmerseitige Schnittstelle (a/b, a/b1, a/b2) und mindestens eine digitale teilnehmerseitige Schnittstelle (S, S1, S2),
**gekennzeichnet durch**
ein Umschaltemittel (DET, 1, 2, 3) zur Umschaltung der netzseitigen Schnittstelle (a/b, U) von einer analogen (a/b) auf eine digitale (U) Schnittstelle.

2. Netzabschlußeinrichtung (NT) nach Anspruch 1, dadurch gekennzeichnet, daß das Umschaltemittel (DET, 1, 2, 3) geeignet ist, reversibel zwischen der analogen (a/b) und der digitalen (U) netzseitigen Schnittstelle (a/b, U) hin- und herzuschalten.

3. Netzabschlußeinrichtung (NT) nach Anspruch 1, dadurch gekennzeichnet, daß das Umschaltemittel (DET, 1, 2, 3) einen Detektor (DET) und einen durch den Detektor (DET) ansteuerbaren und zwischen der netzseitigen (a/b, U) und einer analogen (a/b, a/b1, a/b2) sowie einer digitalen (S) Schnittstelle plazierten Schalter (3) beinhaltet, und daß der Detektor (DET) geeignet ist, ein Umschaltsignal zu empfangen und in Abhängigkeit vom Umschaltsignal den Schalter (3) zu betätigen.

4. Netzabschlußeinrichtung (NT) nach Anspruch 3, dadurch gekennzeichnet, daß der Detektor (DET) geeignet ist, das Umschaltsignal telemetrisch über das Telekommunikationsnetz oder über einen an der Netzabschlußeinrichtung (NT) angebrachten, manuell betätigbaren Schalter zu empfangen.

5. Netzabschlußeinrichtung (NT) nach Anspruch 1, dadurch gekennzeichnet, daß mindestens eine Umsetzeinrichtung (CODEC1, CODEC2) zur Umsetzung von analogen in digitale Signale und mindestens eine Verarbeitungseinrichtung (U/S) zur Protokollanpassung der teilnehmerseitgen digitalen Signale an die netzseitigen digitalen Signale vorgesehen ist, und daß der Detektor (DET) geeignet ist, die Stromzufuhr jeder Umsetzeinrichtung (CODEC1, CODEC2) und jeder Verarbeitungseinrichtung (U/S) zu beeinflussen.

6. Netzabschlußeinrichtung (NT) nach Anspruch 1, dadurch gekennzeichnet, daß mindestens eine Verarbeitungseinrichtung (U/S) zur Bereitstellung einer teilnehmerseitigen S-Schnittstelle und einer netzseitigen U-Schnittstelle zur Verwendung der Netzabschlußeinrichtung (NT) in einem diensteintegrierenden digitalen Netz vorgesehen ist.
